# EUROPEAN PATENT APPLICATION

(11) **EP 2 636 316 A1**
(43) Date of publication of application: **11.09.2013**
(21) Application number: 12158077.3
(22) Date of filing: 05.03.2012
(51) Int. Cl.: A23L 1/10, A23L 1/164, A23L 1/30

(54) **Cereal pieces containing alpha-linolenic acid**

(71) Applicant: Nestec S.A., 1800 Vevey (CH)
(72) Inventor: Ural, Karin, 1400 Yverdon (CH); McKeehen, John, 1012 Lausanne (CH); Esteve, Emilien, 1446 Baulmes (CH)
(74) Representative: Cogniat, Eric Jean Marie

(57) **Abstract**

The invention relates to shelf-stable cereal pieces which contain alpha-linolenic acid, and to food compositions that comprise such cereal pieces.

## Description

### TECHNICAL FIELD

The invention relates to shelf-stable cereal pieces which contain alpha-linolenic acid, and to food compositions that comprise such cereal pieces.

### BACKGROUND OF THE INVENTION

Any discussion of the prior art throughout the specification should in no way be considered as an admission that such prior art is widely known or forms part of common general knowledge in the field.

Alpha-linolenic acid (ALA) is an omega-3 essential fatty acid which must be obtained through the diet. Some studies suggest that ALA may be required for normal infant development, and that it may be related to lower risk of cardiovascular disease. Dietary sources of ALA include flax seed oil, also known as linseed oil. However, flax seed oil is easily oxidized and rapidly becomes rancid with an unpleasant odour. Even when kept under mild storage conditions, it has a shelf life of only a few weeks. Due to their resistant external layer, whole flax seeds are not easily digestible and cannot be considered as an optimum source of ALA.

Other omega-3 fatty acids such as docosahexaenoic acid (DHA) and eicosapentaenoic acid (EPA), can be sourced from fish oil, some algae species or some other plant seeds. Fish oil has an unpleasant taste and is generally consumed in capsules. Other sources may be inconvenient, either due to their origin or scarcity.

WO 2008/024903 A2 to Kellogg Company, relates to food products fortified with omega-3 fatty acids and processes for making the same. In particular, a process for stabilizing an omega-3 fatty acid containing powder onto a food product is disclosed. The process comprises coating the food product with a coating oil, then applying a powder containing at least one omega-3 fatty acid, and finally packaging the food product. Omega-3 fatty acids include DHA and EPA derived from micro algae. Consumers may be reluctant to consume breakfast cereals that contain an algae derivative. In addition, this source of DHA and EPA is quite expensive. Finally, handling powders on an industrial scale may be difficult.

WO 01/97633 A2 to General Mills Inc. relates to nutrient clusters for food products and methods of preparation. The nutrient clusters comprise a first particulate component; a nutrient powder blend, such as essential vitamins and minerals, and sufficient binder to adhere the powder to the particulates. The nutrient clusters are in the form of pieces each weighing from about 0.3 to 5g and having a moisture content of about 2% to 10%.

It is desirable to overcome or ameliorate at least one of the disadvantages of the prior art, or to provide a useful alternative. In particular, it is desirable to provide cereal products enriched in ALA and that are stable over extended storage time.

### SUMMARY OF THE INVENTION

To this end, a first aspect of the invention is a cereal piece comprising a cereal base and from 20 % by weight to 45 % by weight of a flax seed component, said cereal piece having a content of 4 g to 8 g of alpha-linolenic acid per 100 g. In an embodiment, said cereal piece comprises a cereal core and a coating layer, wherein the coating layer comprises the flax seed component and a fat component. In another embodiment, said cereal piece is in the form of a cluster comprising cereal particulates and flax seed component aggregated together with a binder component.

A second aspect of the invention is a cereal product which comprises cereal pieces according to the first embodiment of the invention, said cereal product having an overall content of 1.0 g to 2.5 g of alpha-linolenic acid per 100 g. In a preferred embodiment, the cereal product is packaged in a hermetically sealed packaging under a modified atmosphere.

These and other aspects, features and advantages of the invention will become more apparent to those skilled in the art from the detailed description of embodiments of the invention, in connection with the attached drawings.

### DETAILED DESCRIPTION OF THE INVENTION

Unless the context clearly requires otherwise, throughout the specification, the words "comprise", "comprising" and the like are to be construed in an inclusive sense as opposed to an exclusive or exhaustive sense; that is to say, in the sense of "including, but not limited to".

As used in the specification, the singular forms "a", "an", and "the" include plural referents unless the context clearly dictates otherwise.

As used in the specification, the word "about" should be understood to apply to both bounds in a range of numerals. Moreover, all numerical ranges herein should be understood to include each whole integer within the range.

Unless noted otherwise in the specification, all percentages refer to dry weight percent.

Unless defined otherwise, all technical and scientific terms herein have the same meaning as commonly understood by one of ordinary skill in the art to which this invention belongs.

In a first aspect of the invention is a cereal piece comprising a cereal base and from 20 % by weight to 45 % by weight of a flax seed component, said cereal piece having a content of 4 g to 8 g of alpha-linolenic acid per 100 g.

The cereal base may comprise cereals selected from wheat, corn, rice, oat, barley, rye, sorghum, millets, buckwheat, quinoa or any combination thereof. Preferably, the cereal base comprises wheat, oats, rice, corn, or combinations thereof. The cereals may be minimally or highly pre-processed. The term "processed cereals" refers to cereal grains that are pre-processed by physical milling procedures resulting in any type of minimally or highly milled cereal compositions included cracked-, crushed- or milled grains. Further, the term "processed cereals" may refer to other treatments that enhance the use of the cereals in food stuff such as physical treatments (pressure, shear, etc), heat treatments (cooking, heat assisted hydration), chemical treatments (soaking in alkaline or acidic environment) or enzymatic treatments (hydrolyse of bran). The cereal base may be prepared from cracked grain, milled grain, dry milled flour or any other known mechanically, physically, chemically or enzymatically treated grain and combinations thereof.

The particles of the processed cereals may have an average particle size of from 200 µm or less (e.g. milled flour), to 0.5 to 1 mm (e.g. semolina), to 2 to 3 mm or more (e.g. cracked grain) or up to approximately 5-6 mm length / 3-4 mm diameter (e.g. whole grains).

Preferably, the cereals are whole grain cereals. In other words, all three constituent parts of the grains are included in the cereal base, namely the bran, the germ and the endosperm. Whole grain cereals are advantageous in that they provide nutritional benefits such as dietary fibres, antioxidants from the bran, longer sugar release. Refined cereals, which retain only the endosperm, can also be used in the cereal base. Refined cereals are more easily processed than whole grain cereals in usual cereal processing technologies. Mixes of whole grain cereals and refined cereals can also be used. Such mixes may be preferred because they provide the benefits of whole grain cereals together with the improved processability of refined cereals. The cereal base represents from 40 % by weight to 80 % by weight of the cereal piece, preferably from 55 % by weight to 75 % by weight of the cereal piece.

The flax seed component may comprise comminuted flax seed, such as crushed or ground flax seed, as well as flax seed extract. Incorporating comminuted flax seed rather than whole flax seed in advantageous because comminuted flax seed is more easily digestible. For instance, flax seed component may contain coarsely ground flax seed, finely ground flax seed, flax seed flour, flax seed extract or a combination thereof. Hence, the flax seed component does not encompass whole flax seed. Flax seed may be golden flax or brown flax, or mixes of golden and brown flax. Preferably, the flax seed component represents from 20 % by weight to 45 % by weight of the cereal piece. Preferably, the flax seed component provides a content of from 4 g to 8 g of alpha-linolenic acid per 100 g of cereal pieces.

The cereal piece may comprise an antioxidant component. The antioxidant component helps improving the shelf-life, or storage stability, of the cereal piece, by reducing or preventing oxidation of ALA. Preferably, the antioxidant component comprises phenolic antioxidant compounds such as gallates or hydroquinone, tocopherols, tocotrienols, vitamin E, flavonoids, carotenoids, catechins, ascorbic acid and salts thereof, thiopropionic acid, antioxidant herbs or spices extracts such as rosemary extract, butylated hydroxyanisole (BHA, E320), butylated hydroxytoluene (BHT, E321), tertiary-butyl hydroquinone (TBHQ, E319) or a combination thereof. The cereal piece may comprise from 0.05 % by weight to 1.0 % by weight of the antioxidant component, preferably from 0.1 % by weight to 0.5 % by weight.

The cereal pieces may comprise other components well known to those skilled in the art, such as sugar, honey, sweetening agent, fat, oil, cocoa, flavouring agent, nutrients such as vitamins and minerals, colorant, preservative agent, or emulsifying agent. The sugar may be sucrose, glucose or fructose, for example. Other components may be added to the cereal pieces, such as ground nut or flaked nuts, nut meal or nut powder, dried or freeze-dried fruits, or fruit powder. Examples of nuts include almond, Brazil, cashew, coconut, hazelnut, Macadamia, peanut, pecan, walnut. Examples of fruits include apple, apricot, banana, blueberry, cherry, fig, grape, orange, peach, pear, pineapple, raspberry and strawberry.

Two types of the cereal pieces are mainly considered. In a first embodiment, the cereal pieces comprise a cereal core and coating layer. In a second embodiment, the cereal piece is in the form of a cluster.

In the first embodiment, the cereal pieces are coated cereal pieces which comprise a cereal core and coating layer. Preferably, the coating layer comprises the flax seed component, or part thereof, and a fat component. The cereal core may be any cooked cereal, such as flaked cereals, shredded cereals, extruded cereals, rolled cereals, gun-puffed cereals, oven-puffed cereals, extruded gun-puffed cereals, extruded expanded cereals, or baked breakfast cereals. For instance, the cereal core is an extruded cereal, such as described for instance in EP 0898890 A1, EP 1051922 A1, EP 1236407 A1 and EP 1447011 A1, the disclosure of which is incorporated by reference. Typically, extruded cereals are based on wheat, rice or corn. Alternatively, the cereal core may be a cereal flake, such as corn flake.

Typically, in a coated cereal piece, the cereal core represents from 25 % by weight to 50 % by weight of the coated cereal piece, and the coating represents from 50 % by weight to 75 % by weight of the coated cereal piece. Typically, the cereal core comprises at least 50 % by weight of cereal, preferably at least 70°% by weight of cereal, and up to 95 % by weight, or even up to 99 % by weight of cereal. Other components of the cereal core may be sugar, malt, refiners syrups, salt, stabilizers and pH modifiers.. The cereal core may also comprise part of the flax seed component. Typically, the coating layer comprises the flax seed component and a fat component. Advantageously, the coating layer also comprises the antioxidant component. The coating layer comprises
- from 25 % by weight to 35 % by weight of flax seed component, preferably from 30 % by weight to 33 % by weight,
- the remainder of fat component.

Preferably, the fat component comprises cocoa butter, vegetable oil. In addition, the coating layer may comprise flavouring components, colorants, milk powder, probiotic, inactivated probiotic, and dairy cultures. Preferably, coated cereal pieces comprise from 4 g to 8 g of ALA per 100 g, more preferably from 4 g to 6 g of ALA per 100 g, even more preferably from 4 g to 5 g of ALA per 100 g.

Extruded cereals are generally prepared as follows. First, the dry ingredients are mixed in the required amounts. Dry ingredients include cereal component, up to 1% by weight salt, up to 0.5% processing aids to add up to 100% of the dry mix. Sucrose may, optionally, also be added, in amounts of 1.5-20%, preferably 2-15%, more preferably 3-9%. Then an amount of about 2 to 7% oil and about 10 to 15% water, calculated as percentage of the total dry mix weight, may be mixed together with the dry mix before feeding the complete mix into an extruder. The complete mix may have a water content of about 10 to 15%, preferably about 11 to 13%. Any suitable extruder, such as a BC-72 type Clextral twin screw extruder having a screw diameter of 88 mm and a screw length of 1200 mm may be used, for example. Extrusion may be carried out at 100°C to 200°C, under a pressure of 20-200 bars, the two intermeshing screws rotating at 200-400 rpm for example. The cooked thermoplastic mass may thereafter be extruded through an extrusion die. The thermoplastic mass may be extruded directly into ambient air, for example, and immediately cut with a blade cutter rotating adjacent to the opening of the die. The extrusion parameters, the die and the cutting process may be modified in order to modify the characteristics of the extruded cereal core, such as the texture, shape, size, and so forth. In other words, any extruder, die or cutting device may be used to obtain an extruded cereal core. Optionally, the extruded cereal core is dried to a moisture content (percent by weight) of not more than 7%, preferably 1% to 5%, more preferably 1% to 4%.

Cereal flakes are conventionally prepared as described below. The dry ingredients are mixed together at the required amount. Dry ingredients comprises cereal component, preferably whole grain as mentioned above, up to 1% by weight of salt, up to 0.5% processing aids to add up to 100% of the dry mix. A sugar syrup containing up to 70% sugar is also prepared. The sugar syrup may contain flavouring, colorants, or nutrient fortification. The dry mix and the sugar syrup are charged into a batch cooker (Dalton cookers, UK).

Following this, the cooking cycle starts with the rotation of the batch cooker (1 1 - 4rpm) and steam addition at 1 -1.25 bar during 2 hours. At the end of the cooking cycle (usually 2 hours), the moisture content should not be more than 32%. The cooked dough is discharged onto a conveyor belt under the cooker discharge, and passes through a delumping equipment in order to break the lumps of the product. Then the cooked dough is conveyed to a dryer. In the dryer, the moisture of the cooked dough should is reduced to 10 - 14%. After drying, the cooked dough is cooled in order to bring the dough temperature down to ambient temperature. Then, the dough is rolled into thin flakes by passing between pairs of metal rolls. Flakes are then toasted by keeping them suspended in a stream of air stream at 100 - 330°C for a duration of approximately 90s depending on the type of the flakes.

The uncoated cereal cores, such as extruded cereal or cereal flakes, may then be coated as follows. The uncoated cereal cores are charged into the drum of a belt coater (DRA 600, Wolf Spezialmaschinen). The belt coater may already contain a coating composition. Alternatively, the coating composition is added in the belt coater simultaneously with, or after, the uncoated cereal cores. Preferably, the coating composition is added continuously in the belt coater while the belt is in motion. A stream of cold air cools down the cereal pieces so that coating layer is formed and accumulates on the surface of the cereal cores. When the cereal cores are coated as required, the cereal pieces are discharged from the belt coater. The coating composition comprises the flax seed component and the fat component of the coating layer.

In addition, the cereal piece may comprise an external glazing layer. The external glazing layer comprises gum, shellac or any other glazing agent. It is applied by spraying a glazing liquid composition onto coated cereal pieces in a coating pan.

In a second embodiment, the cereal piece is in the form of a cluster. A cluster comprises cereal particulates and flax seed component aggregated together with a binder component. Clusters may comprise other components such as fruits or nuts. Examples of clusters are described in WO 01/97633 A2, the disclosure of which is incorporated by reference. Preferably, clusters have a water content of 1.5 % by weight to 6.5 % by weight. Below 1.5 % by weight of moisture in the clusters, rancidity develops too fast. Above 6.5 % by weight of moisture in the clusters, the cereal piece is too soft and looses texture and flavour. Preferably, clusters have a water content of 3.5 % by weight to 5 % by weight. Preferably, the clusters contain from 4 g to 8 g of ALA per 100 g, more preferably from 4.5 g to 7.5 g of ALA per 100 g, and even more preferably from 5 g to 7 g of ALA per 100 g.

Generally, clusters are made by mixing a binder to a dry mix, in a panning tumbler for instance. The dry mix represents 50 % to 70 % by weight of the cluster, preferably 55 % to 65 % by weight of the cluster, and more preferably about 60 % by weight of the cluster. The dry mix contains from 55 % by weight to 80 % by weight of cereal particulates, and from 55 % by weight to 80 % by weight of flax seed component. Preferably, the flax seed component is ground or crushed flax seed, or flax seed flour. Cereal particulates may be any cooked cereal, such as flaked cereals, shredded cereals, extruded cereals, rolled cereals, gun-puffed cereals, oven-puffed cereals, extruded gun-puffed cereals, extruded expanded cereals, or baked breakfast cereals. The dry mix may comprise other ingredients, such as ground nut or flaked nuts, nut meal or nut powder, dried or freeze-dried fruits, or fruit powder. Examples of nuts and fruits have already been provided. The dry mix may also comprise nutrients, such as vitamins and minerals.

The clusters comprise sufficient amounts of a binder to bind together the dry mix ingredients to form said clusters. The particular binder usage level depends upon a variety of factors such as the desired textural properties in the finished product. Generally, however, good results are obtained when the binder represents 30 % to 50 % by weight of the cluster, preferably 35 % to 45 % by weight of the cluster, and more preferably about 40 % by weight of the cluster.

The art is replete with suitable binders and the skilled artisan will have no difficulty in selecting a suitable binder. Solutions or slurries can be prepared where various gums (e.g., guar, pectin, carragenan, xanthan, carboxymethylcellulose, gellan), proteins (e.g., gelatin, soy proteins, egg whites, hydrolyzed soy proteins), starches (e.g., pregelatinized, modified starches) are used as the binder. Preferably, nutritive carbohydrate sweetening agents (sucrose, dextrose, corn syrup, honey, fruit juices) are used as binder. The binder is usually applied dissolved or dispersed in liquid form. Excess moisture is then removed by drying.

Binders can additionally comprise a fat (oil and/or solid) component. The fat component additionally affects the eating qualities of the present compositions. The fat ingredient can also assist in minimizing interaction between any oil soluble flavors included and the insoluble calcium ingredient. For fat bearing binders, the binder is provided with liquid oil or fat heated to above its melting point.

The fat can comprise preferably about 0.1 to 50%, more preferably 0.5 to 30% and for best results about 0% to about 20% of the cluster. Useful herein are fats and oils that are conventional for use in food products, especially for confections. Both conventional fatty triglyceridic materials such as oils and solid fats can be used herein as well as blends of fats and oils or fats and sugars, that is compound coatings or white chocolate. Also useful herein are fats, especially partially hydrogenated oils such as canola, corn oil, safflower, soybean, coconut, cottonseed or fractionated oils, all of which have melting points above room temperature.

Preferably, the fat component can additionally include lecithin and other emulsifiers, e. g., acetylated mono-glycerides, if desired.

The clusters are formed into suitably sized and shaped pieces. In a preferred embodiment, the pieces are bite sized ranging from about 0.5 g to 10 g, preferably about 1 g to 8 g each. The pieces can, if desired, be imparted with a particular shape such as an animal or vehicle. The pieces can be of all one color or portions can be of additional colors.

The drying step is practiced to transform the soft cluster pieces into hardened pieces by solidifying the binder. For instance, the cluster pieces are dried, for instance by forced air drying, to dry the pieces to a water content of 1.5 % by weight to 6.5 % by weight. Such drying can remove any moisture added in the liquid binder such as when a sugar syrup is used as the binder.

In a preferred embodiment, the cereal pieces according to the invention have a shelf-life of at least 3 months, as defined in the accelerated rancidity test. Preferably, the cereal pieces according to the invention have a shelf-life of at least 6 months, and even more preferably, of at least 9 months, as defined in the accelerated rancidity test.

Flavour stability of cereal product is normally assessed prior to launch using accelerated rancidity test. The test consists in storing the cereal pieces at elevated temperature (55°C) for various amount of time (2, 3 and 4 weeks). Samples are subsequently tasted and scored taking into consideration odour and flavour sensory characteristics. The evaluation is performed by a 3 or 4 trained panelists. The score is established as a consensus after discussion and agreement is reached amongst all participants. The scoring is done on a 5 point Degree of Difference scale (from 0 to 4). The scale is used extensively to evaluate the quality loss over time.

| Score | Degree of Difference Scale |
|---|---|
| 0 | Identical or similar to control |
| 1 | Like control, until compared side by side to the control. A flavor loss or slight change in texture is detected while compared to the control. |
| 2 | Not like control. The difference is noticeable without going back to the control |
| 3 | Detection of clear off-notes. Product texture is marginal (tough). Product is not yet objectionable. |
| 4 | Strong difference from control with either objectionable appearance, aroma, taste or texture. Product is rejected. |

Based on this accelerated rancidity test, it is possible to predict the quality loss of the tested product in ambient conditions, with data from 4 weeks testing at 55°C.

In a second aspect, the invention relates to a cereal product which comprises cereal pieces which contain a cereal base and from 20 % by weight to 45 % by weight of a flax seed component, said cereal piece having a content of 4 g to 8 g of alpha-linolenic acid per 100 g, as defined according to the first aspect of the invention. In addition, the cereal product has an overall content of 1.0 g to 2.5 g of alpha-linolenic acid per 100 g. In other words, the cereal product contains ALA-cereal pieces together with other ingredients. The other ingredients may be cereal pieces that do not contain ALA, such as ready-to-eat breakfast cereals (cereal flakes, puffed cereals, extruded cereals, batch cooked cereals, shredded cereal products) combined with cereal clusters, ground nut or flaked nuts, nut meal or nut powder, dried or freeze-dried fruits, or fruit powder. Examples of nuts include almond, Brazil, cashew, coconut, hazelnut, Macadamia, peanut, pecan, walnut. Examples of fruits include apple, apricot, banana, blueberry, cherry, fig, grape, orange, peach, pear, pineapple, raspberry and strawberry.

Preferably, the cereal product contains at least 8 grams of whole grain cereal per serving, and even more preferably, at least 16 grams of whole grain cereal per serving. Usually, a serving varies between 25 and 50 g of cereal product.

In order to improve the shelf-life of the cereal product, the cereal product is packaged in a hermetically sealed packaging under a modified atmosphere. This prevents or reduces oxidation of the cereal product as long as the package remains closed. Various modified atmosphere can be considered, such as nitrogen, nitrous oxide, carbon dioxide, oxygen-depleted air, and a combination thereof. This can be achieved by flushing the open filled packaging with the required gas before sealing the packaging. It can also be achieved by filling the packaging with cereal product under the required controlled atmosphere, and sealing the packaging while still in the controlled atmosphere. The modified atmosphere can also be partial vacuum.

The cereal product can be selected from a breakfast cereal, a porridge, a cereal snack, and a cereal bar.

### EXAMPLES

### Example 1- Extruded cereals with a coating

Extruded cereal pieces are prepared in a conventional double screw extruder. Several kinds of shapes may be prepared, such as ball, arrays of beads, or stars. The pieces are dried to a water content of 2.5 % by weight.

| Recipe | 1 | 2 |
|---|---|---|
| Composition | Whole wheat flour: 48% | Whole wheat flour: 44% |
| | Corn semolina: 33% | Flour rice: 35% |
| | Flour rice: 9% | Corn semolina: 6% |
| | Sugar. 6% | Sugar: 5% |
| | Oil: 3% | Oil: 7% |
| | Salt: 1% | Brown sugar: 3% |
| Shape | Ball | Arrays of beads |

A coating composition is prepared, which comprises white chocolate or dark chocolate or milk chocolate, sugar, cocoa butter, whole milk powder, whey powder, emulsifier, flavour
25 kg of extruded cereal pieces are placed in a belt coater. 75 kg of coating composition is poured slowly into the belt coater and the mixture is slowly cooled down until the coating layer is completely solid. Once the coating composition is completely solid, 1% of glazing agent is sprayed.

Coated cereal pieces are obtained which comprise 25 % by weight of ground flax seed and 5 g of ALA per 100 g.

### Example 2 - Coated wheat flakes

Wheat flakes are prepared in a conventional manner. In parallel, a coating composition is prepared, as in example 1 which comprises white chocolate or dark chocolate or milk chocolate, sugar, cocoa butter, whole milk powder, whey powder, Emulsifier: soya lecithin, flavour
25 kg of wheat flakes are placed in a belt coater. 75 kg of coating composition is poured into the tumbler and the flakes are mixed with the coating composition until the flakes are coated with the coating composition.

Coated wheatflakes are obtained which comprise 25 % by weight of ground flax seed and 5 g of ALA per 100 g.

### Example 3 - Cluster

Clusters are prepared in a conventional panning tumbler, as described above.

| Recipe | 3 | 4 |
|---|---|---|
| Dry mix composition | Ground flaxseed: 27%, Crispies: 36%, | Ground flaxseed: 41%, Crispies: 22%, |
| Binder composition | Sugar: 15%, glucose: 10%, oil: 10%, honey: 0.7, Vit E: 0.4%, Salt: 0.3%, Starch: 0.2%, Lecithin: 0.15%, Vit C: 0.1%, Flavour: 0.03% | Sugar: 15%, glucose: 10%, oil: 10%, honey: 0.7, Vit E: 0.4%, Salt: 0.3%, Starch: 0.2%, Lecithin: 0.15%, Vit C: 0.1%, Flavour: 0.03% |

The clusters are then dried to a water content of 2 to 4 % by weight. Clusters are obtained which comprise 20 - 45 % by weight of ground flax seed and 3.6 to 10.8 g of ALA per 100 g.

### Example 4 - Breakfast cereal

Cereal pieces without flax seed component can be prepared in a similar way as disclosed in examples 1, 2 and 3. Several ready-to-eat breakfast cereal compositions are prepared by mixing cereal pieces of examples 1, 2 or 3, with cereal without flax seed component.

| Recipe | | A | B | C | D |
|---|---|---|---|---|---|
| Cereal pieces | Recipe # | 1 | 2 | 3 | 4 |
| | Weight % | 30% | 30% | 20% | 20% |
| | Recipe # | 1* | 2 * | 2 * | uncoated wheat flakes |
| | Weight % | 70% | 70% | 80% | 80% |
| Other | | Chocolate pieces | nuts | Fruit pieces | nuts |
| ALA per 100 g (g) | | 1.5 | 1.5 | 1 | 1.4 |

| | | | | | |
|---|---|---|---|---|---|
| * means that the same recipe is used but without flax seed component | | | | | |

Although preferred embodiments have been disclosed in the description with reference to specific examples, it will be recognised that the invention is not limited to the preferred embodiments. Various modifications may become apparent to those of ordinary skill in the art and may be acquired from practice of the invention. It will be understood that the materials used and the chemical details may be slightly different or modified from the descriptions without departing from the methods and compositions disclosed and taught by the present invention.

## Claims

1. Cereal piece comprising a cereal base and from 20 % by weight to 45 % by weight of a flax seed component, said cereal piece having a content of 4 g to 8 g of alpha-linolenic acid per 100 g.

2. Cereal piece according to claim 1, wherein the flax seed component contains coarsely ground flax seed, finely ground flax seed, flax seed flour, flax seed extract or a combination thereof.

3. Cereal piece according to claim 1 or 2, which comprises from 0.05 % by weight to 1.0 % by weight of an antioxidant component.

4. Cereal piece according to claim 3, wherein the antioxidant component comprises phenolic antioxidant compounds, tocopherols, tocotrienols, vitamin E, flavonoids, carotenoids, catechins, ascorbic acid and salts thereof, thiopropionic acid, antioxidant herbs or spices extracts, butylated hydroxyanisole, butylated hydroxytoluene, tertiary-butyl hydroquinone, or a combination thereof.

5. Cereal piece according to any one of claims 1 to 4, which comprises a cereal core and a coating layer, wherein the coating layer comprises the flax seed component and a fat component.

6. Cereal piece according to claim 5, which further comprises an external glazing layer.

7. Cereal piece according to claim 5 or 6, wherein the cereal core is an extruded cereal or a cereal flake.

8. Cereal piece according to any one of claims 1 to 4, which is in the form of a cluster comprising cereal particulates and flax seed component aggregated together with a binder component.

9. Cereal piece according to claim 8, which has a water content of 1.5 % by weight to 6.5 % by weight.

10. Cereal piece according to any one of claims 1 to 9, which has a shelf-life of at least 3 months, as defined in the rancidity test.

11. Cereal piece according to any one of claims 1 to 10, wherein the cereal base comprises a cereal selected from wheat, corn, rice, oat, barley, rye, sorghum, millets, buckwheat, quinoa or any combination thereof.

12. Cereal product which comprises cereal pieces according to any one of claims 1 to 11, and has an overall content of 1.0 g to 2.5 g of alpha-linolenic acid per 100 g.

13. Cereal product according to claim 12, which is packaged in a hermetically sealed packaging under a modified atmosphere.

14. Cereal product according to claim 13, wherein the modified atmosphere is selected from nitrogen, nitrous oxide, carbon dioxide, oxygen-depleted air, and a combination thereof; or the modified atmosphere is partial vacuum.

15. Cereal product according to any one of claims 12 to 14, which is selected from a breakfast cereal product, a porridge, a cereal snack, and a cereal bar.
